# EUROPEAN PATENT APPLICATION

(11) **EP 1 860 581 A1**
(43) Date of publication of application: **28.11.2007**
(21) Application number: 07252076.0
(22) Date of filing: 21.05.2007
(51) Int. Cl.: G06F 17/30

(54) **Systems and methods for sharing digital media content**

(30) Priority: 22.05.2006 US 802315 P
(71) Applicant: SonicSwap Inc., Palo Alto, CA 94301 (US)
(72) Inventor: Friedman, Jay H., Monte Sereno, CA 95030 (US); Skilken, Daniel C., Monte Sereno, CA 95030 (US); Bannert, Aaron G., San Francisco, CA 94133 (US)
(74) Representative: Townsend, Victoria Jayne

(57) **Abstract**

Methods and systems are provided for sharing digital media content and creating and sharing digital media content lists that in some embodiments may take the form of device independent playtists. The methods and systems can determine if a user can access content referenced by the playlists and if not, enable the user to gain legal access to the content. In some embodiments, systems and methods for accessing digital content include receiving a request to search a database comprising digital content lists based at least in part on parameters received from a user. A digital content list including at least one reference to digital content is returned in response to the request. It is determined if any of the digital content referred to by the at least one reference to digital content is playable by the user. In other embodiments, systems and methods can find users with similar digital content.

## Description

### Crass-Reference to Related Application

This application claims the benefit of United States Provisional Patent Application No. 60/802,315 filed May 22, 2005, which is hereby expressly incorporated by reference herein in its entirety.

### Technical Field

The present invention relates to managing digital media content. More particularly, this invention relates to sharing lists of digital media content in a device independent manner.

### Background

Storing music and other media, including but not limited to video, in a digital format is a common way for individuals and organizations to manage their media content collection. Many different digital formats exist for storing and playing music, video, and other digital content. Some current formats include, for example, MP3, MP4, AAC, WAV, MOV, and AVI. Digital music files may be played on a wide variety of devices including laptop computers, portable telephones, personal digital assistants, and portable digital music players such as the iPod^{®} from Apple Computer, Inc. and the MuVo® from Creative Technology Ltd. Many of these devices may also play digital video content.

The creation of playlists is a popular method of organizing multiple songs or other content into groups on a content player. After creation, a playlist can be accessed and the content in it may be played or otherwise executed by a content player. Access to content in the playlist may be, for example, in a specified order or a random order, depending on user preferences or the capabilities of the content player. Playlists may also be shared among users of the same digital content players so that one user may use another user's playlist. One way a playlist may be shared is by sending it from one user to another user as a file attached to e-mail.

Content players or devices that play digital music or other types of content usually can only play certain file formats. For example, an iPod® digital content player typically cannot play WMA files, while a MuVo® digital content player typically can. Conversely, a MuVo® digital content player typically cannot play ACC files, though an iPod® digital content player can. Additionally, the formats for the playlists created and used on different devices may not be compatible even if the formats of the content are the same. For example, a playlist created for an iPod® digital content player containing only MP3 files cannot be used to organize or play music on a MuVo® digital content player even though both the iPod® digital content player and MuVo® digital content player typically can play MP3 files. Thus, a user of one type of digital content player may not be able to share his or her playlist with a user of a different type of content player.

Another problem that arises in the sharing of playlists concerns the accessibility of the content referenced in a playlist. For example, if a user were to receive a playlist from another user, it is possible that the receiving user may not be able to play or otherwise access the listed content because, for example, he or she has not purchased that content.

Accordingly, it is desirable to provide methods and systems for creating, storing, and sharing playlists that are device independent. That is, it would be of great benefit if users with different types of digital music players, digital video players, computers, and various other content playing devices could enjoy the benefits of sharing playlists with each other. It would also be beneficial if systems and methods could be provided to manage the accessibility to the content referenced in the playlists and to enable users to gain access.

### Summary

In some embodiments, the present invention provides methods and systems for creating and sharing digital media content that in some embodiments may take the form of device independent playlists. The playlists comprise lists of digital content, which may be, for example, music files and video files in any digital format. Methods and systems are also provided for determining if a user can access the content referenced by the playlist and enabling the user to gain legal access to the content if the user does not have access to it.

In one embodiment of the present invention, systems and methods for accessing digital content are disclosed. The methods and systems comprise receiving a request to search a database comprising digital content lists based at least in part on parameters received from a user. A digital content list including at least one reference to digital content is returned in response to the request. It is determined if any of the digital content referred to by the at least one reference to digital content is playable by the user.

In another embodiment of the present invention, systems and methods for finding users with similar digital content are disclosed. The systems and methods comprise receiving a request for identification of users having similar digital content from a first user. A library comprising digital content of the first user is compared to libraries comprising digital content of a plurality of other users based at least in part upon similarity between the library of digital content of the first user and the libraries of digital content of the plurality of other users. A reference is returned to at least one user of the plurality of users to the first user based upon the similarity between the digital content included in the library of the first user and the digital content included in the library of the at least one user of the plurality of users.

There has thus been outlined, rather broadly, the more important features of the invention so that the detailed description thereof that follows may be better understood, and in order that the present contribution to the art may be better appreciated. There are, of course, additional features of the invention that will be described hereinafter and which will form the subject matter of the claims appended hereto.

In this respect, before explaining at least one embodiment of the invention in detail, it is to be understood that the invention is not limited in its application to the details of construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which this disclosure is based, may readily be utilized as a basis for the designing of other structures, methods and systems for carrying out the several purposes of the present invention. It is important, therefore, that the claims be regarded as including such equivalent constructions insofar as they do not depart from the spirit and scope of the present invention.

Further, the purpose of the foregoing abstract is to enable the U.S. Patent and Trademark Office and the public generally, and especially the scientists, engineers and practitioners in the art who are not familiar with patent or legal terms or phraseology, to determine quickly from a cursory inspection the nature and essence of the technical disclosure of the application. The abstract is neither intended to define the invention of the application, which is measured by the claims, nor is it intended to be limiting as to the scope of the invention in any way.

These together with other objects of the invention, along with the various features of novelty which characterize the invention, are pointed out with particularity in the claims annexed to and forming a part of this disclosure. For a better understanding of the invention, its operating advantages and the specific objects attained by its uses, reference should be had to the accompanying drawings and descriptive matter in which there is illustrated exemplary embodiments of the invention.

Other objects of the present invention will be evident to those of ordinary skill, particularly upon consideration of the following detailed description of embodiments of the invention.

### Brief Description of the Drawings

FIG. I is a schematic diagram of an illustrative system suitable for implementation of systems and methods in accordance with some embodiments of the present invention;

FIG. 2 is a detailed example of the server and one of the clients of F1G. 1 that may be used in accordance with some embodiments of the present invention;

FIG. 3 is a schematic diagram of an illustrative system suitable for implementation of systems and methods in accordance with some embodiments of the present invention;

FIG. 4 is a schematic diagram of an illustrative system suitable for implementation of systems and methods in accordance with some embodiments of the present invention;

FIG. 5 is a screen shot that illustrates some aspects of systems and methods in accordance with some embodiments of the present invention; and

FIG. 6 is a screen shot that illustrates finding and viewing playlists in accordance with some embodiments of the present invention.

### Detailed Description

In the following detailed description, numerous specific details are set forth regarding embodiments of the systems and methods of the present invention and the environment in which embodiments of the systems and methods of the present invention may operate, etc. in order to provide a thorough understanding of the present invention. It will be apparent, however, to one skilled in the art that the present invention may be practiced without such specific details. In other instances, well-known components, structures, techniques, and features that are well known in the art are not described in detail in order to avoid complication of the subject matter of the present invention and to avoid unnecessarily obscuring the subject matter of the present invention. Moreover, various examples are provided to explain the operation of the present invention. It should be understood that these examples are exemplary. It is contemplated that there are other methods and systems that are within the scope of the present invention. It should also be noted that like reference characters refer to like parts throughout the figures.

Methods and systems are provided for the creation and sharing of device independent playlists. The playlists comprise lists of digital content, which may be, for example, music files and video files in any digital format. Methods and systems are also provided for determining if a user can access the content referenced by the playlist and enabling the user to gain legal access to the content if the user does not have it.

In some embodiments, methods and systems are provided for accessing digital content. These methods and systems include receiving a request to search a database of digital content based at least in part on parameters received from a user. In response to the request to search for digital content, a list including at least one reference to digital content is returned. It is determined if the content referred to by the at least one reference to digital content is playable by the user. If it is not, the systems and methods enable the purchase of the content. In other embodiments, the determination of whether digital content referred to in a list is playable by a user may be based at least in part on if the user owns the referenced content.

In still other embodiments, systems and methods are provided for finding similar users or similar sets of users based at least in part upon an overlap, a commonality, or a similarity between the libraries of digital content that the users own, play, or to which they have access.

FIG. I is a schematic diagram of an illustrative system 100 suitable for implementation of systems and methods for creating, sharing, searching, organizing, and accessing playlists of digital content in accordance with some embodiments of the present invention. As illustrated, system 100 may include one or more clients 102. Clients 102 may be local to each other or remote from each other, and may be connected by one or more communications links 104 to a communications network 106 that is linked via a communications link 108 to a server 110. It should be noted that the system may include more than one server 110 and that only server is shown for ease of illustration. Various embodiments of the present invention may be implemented on at least one of the server and the clients. Furthermore, various embodiments of the present invention may be implemented on a system in a peer-to-peer network. That is, in some embodiments, at least one of the clients 102 and the server 110, as described in this description, may actually be peers on a computer network.

In system **100,** server **110** may be any suitable server for executing an application, such as a processor, a computer, a data processing device, or a combination of such devices. Communications network 106 may be any suitable computer network including, but not limited to, the Internet, an intranet, a wide-area network (WAN), a local-area network (LAN), a wireless network, a digital subscriber line (DSL) network, a frame relay network, an asynchronous transfer mode (ATM) network, a virtual private network (VPN), etc., or any combination of any of the same. Communications links 104 and 108 may be any communications links suitable for communicating data between clients **102** and server **110,** including, but not limited to, network links, dial-up links, wireless links, hard-wired links, T-1, T-3, DSL, etc. Clients **102** may include, but are not limited to, personal computers, laptop computers, mainframe computers, dumb terminals, data displays, Internet browsers, personal digital assistants (PDAs), two-way pagers, wireless terminals, portable telephones, digital music players, digital video players, etc., or any combination of the same. Clients **102** and server **110** may be located at any suitable location. In one embodiment, clients **102** and server **110** may be located within an organization. Alternatively, clients **102** and server **110** may be distributed between multiple organizations.

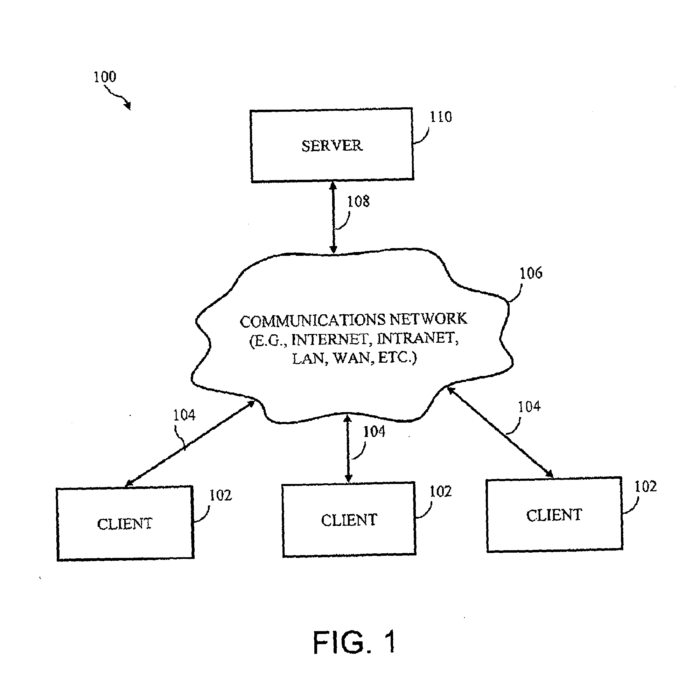

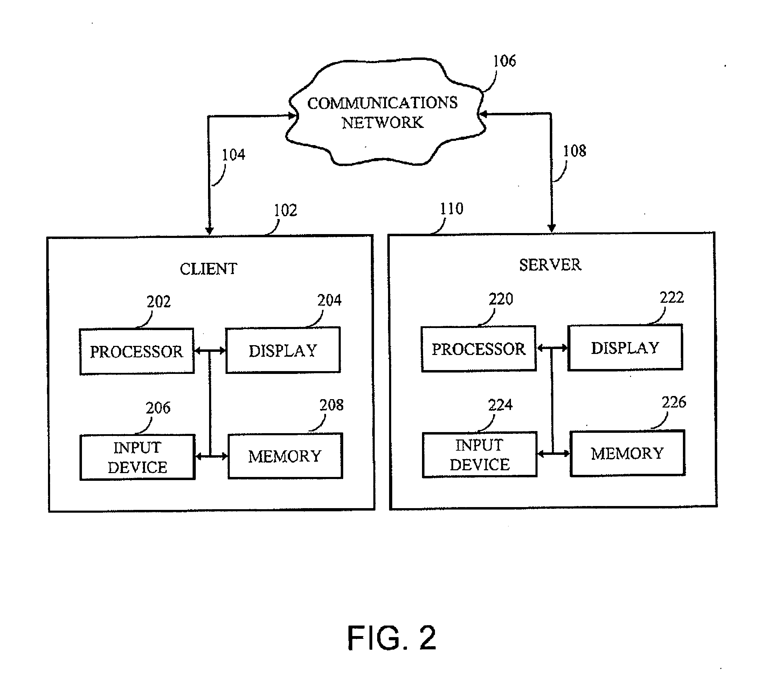

The server **110** and one of the clients **102,** which are depicted in FIG. 1, are illustrated in more detail in FIG. 2. Referring to FIG. 2, client 102 may include processor 202, display 204, input device **206**, and memory **208,** which may be interconnected. In one embodiment, memory **208** contains a storage device for storing a client program for controlling processor **202.** Memory **208** may also contain an application for creating, sharing, searching, organizing, and accessing playlists of digital content. In some embodiments, applications may be resident in the memory **208** or **226** of client **102** or server **110**.

In some embodiments of the present invention, systems and methods for sharing and exchanging device independent playlists are provided. To begin the process, a user creates a playlist of content. This playlist may be created by, or an extraction from, any software capable of creating a playlist. Some possible examples of software that can be used to create playlists includes iTunes^{®}, Windows^{®} Media Player, and Real Rhapsody^{®}. Once created, users may upload the playlists via the network **106** to a server **110** that is capable of storing and managing playlists. The playlists may be created in a format that is device independent or device dependent. Therefore, it may be necessary to convert the playlists between various device dependent and device independent formats. These conversions may be done at various times. For example, the playlists may be converted to a device independent format on the client **102** before being uploaded to the server **110.** Conversely, the playlists may be uploaded in a device dependent format from client 102 and then converted to a device independent format after being received by the server 110 or another device with a processor on the network. The device independent format may be a standard interchange format such as, for example, but not limited to XML, XSPF, and SMS.

The conversion from device dependent format to device independent format may be performed in various ways. One way the conversion may be performed is by using a catalog of sorts to create unique interfaces or cross-references for importing and exporting playlists from various content players using tools such as, for example, XML and XSL (XML style sheet language). Playlists may then be read and written in various formats and converted from one known format to another. For example, if a playlist is imported from a source using the format of iTunes^{®} and exported to a source using the format of Windows^{®} Media Player, only the data elements from the iTunes^{®} playlist that are relevant to the Windows^{®} Media Player playlist format are exported. Such a conversion, from one device dependent format to another device format, may be accomplished by storing cross-references that describe how data from one source can be translated to multiple other sources. More specifically, translation information may be stored that describes how each of the data elements in a certain playlist format correspond to each of the data elements in every other known playlist format. Accordingly, it should be noted that in some embodiments, the systems and methods of the present invention do not require a device independent format. Instead, as discussed above, a playlist may be stored in device dependent format and then translated directly to another device dependent format. It should also be noted that new formats may be added to the catalog so that conversions to and from new and known formats may be performed.

In some embodiments of the systems and methods of the present invention, access permissions may be set by a user to allow selective access to his or her uploaded playlists by a specific group or groups of other users. Possible users include, but are not limited to, a predefined group of friends, the general public, the creator only, and other types or categories of users that meet specific criteria. A user may set the permissions to access a playlist such that others can alter the playlist by, for example, inserting content references, deleting content references, and reordering the playlist. It is also possible that access permissions are set so that users may view, but not alter, a playlist. A user may also be enabled to publish his or her playlist to a permanent public library. This library may be comprised of playlists that once published, are no longer changeable by any user including the creator.

A playlist and the content that it refers to may also contain associated information that can be used, for example, to identify who created the content. The device independent format, which was described above, may include meta tags to store and manage this information. Examples of the meta tag data associated with playlists include, but are not limited to: playlist name, playlist publisher (the user), creation date, playlist rating, frequency of playlist playing, and the list of content in the playlist. Examples of the meta tag data that are related to the content referred to in the playlist include, but are not limited to: song name, artist name, album name, track ld, frequency of play, recency of play, song rating, genre, composer, and year published. One example of a playlist, in XML format, including various meta tags is shown in Appendix A, for illustrative purposes only.

In some embodiments, playlists uploaded from the user's library may be compared and matched against a standardized catalog database of content to, for example, match the content referred to in the user's playlists with the corresponding content contained in the standardized catalog database stored on server **110.** This catalog may be a database of commercially released songs, CDs, and albums. Information in the database may be stored using meta tags and the meta tags may describe information such as album name, artist name, song name, description of content, rating, and retail price. The catalog may contain information corresponding to whether and how the content has been commercially or otherwise released. In some embodiments, the standardized catalog may be integrated into the catalog discussed above.

One issue that arises in the management of such a catalog is that the same content may be present from differing sources. Therefore, it would be useful to determine when references to content, despite having different associated meta tag information, are actually referring to the same content. To solve this problem, the catalog may include a matching process that tags the same or similar content across multiple sources as similar or equivalent. For example, the song "Yesterday" by the Beatles on the album "Help!" may be marked as equivalent to the song "Yesterday" on the Beatles' "Greatest Hits 62-66" album.

One skilled in the art will appreciate that the matching may be performed in many ways. One possible approach is using text matching to find all songs of the same name and create a cross-reference for all albums on which that song is published for each artist. This approach allows broader applications of playlist sharing whereby, for example, if a user publishes a playlist with a song such as "Yesterday" by the Beatles on the "Help!" album, another user, who has the same song "Yesterday" by the Beatles on the "Greatest Hits 62-66" but not the version on the "Help" album, will still be able to match this song to their library when downloading this playlist.

In some embodiments of the present invention, methods and systems may be used for searching a database stored on server **110** containing the uploaded playlists of a plurality of users. A search of the database for a playlist may include, for example, keywords and phrases, Boolean operators, inclusion and exclusion operators, field markers, meta data information, user profile information, and playability information. User profile information may include, for example, favorite artists and songs, disliked artists and songs, composers, age, sex, genre, and playability information.

The searching may also include filtering and sorting results of a search by factors such as playability and meta tag data. The playability of content refers to whether or not a user is allowed to access that particular content. Playability may depend on many factors including, for example, copyrights, licenses, ownership, or if the content is publicly available. A user may make content playable by, for example, paying a fee. For example, if a playlist returned by a search contains content that a user does not have legal access to, the user will not be able to access that content without first changing its playability. If the user decides that he or she would like to access that content, it may be purchased and will then be playable by that user.

The system and methods may parse the search parameters and perform the search against the playlists in the database. Field markers may specify that any keyword or phrase should apply only to a specified field. Any standard search engine may be used to search the database. One possible choice for a search engine is Lucene, which is available from the Apache Software Foundation. The search will identify the top scoring playlists with the closest match to the search parameters. However, depending on the parameters, different results may be returned. The systems and methods may also sort the returned results based on the search parameters or other considerations. For example, a search may be performed based on several parameters, but the results may be sorted based on playability.

Additionally, a set of given search and sort parameters may be used to identify a base playlist or set of playlists for a user. These base playlists may be used, for example, to represent the typical content a user enjoys. This base playlist or set of base playlists may then be used to compare to other playlists that are returned by searches. Therefore, in some embodiments of the present invention, a plurality of playlists may be compared against each other to find similarities. This may be done by calculating a score based on the amount of equivalent content that is referenced among the various playlists. The score may be calculated by considering other factors such as genre, artists, year of publication, and any other information that is known about the content.

An example search using an embodiment of systems and methods of the present invention is now presented. The search might specify the genre as "rock" and the group as the "Rolling Stones." Further, the search may specify that the results be sorted against the playlist of a user named "Fred." The system may then perform a search against a database of playlists and return results most likely to contain tracks of the rock genre and with tracks containing "Rolling Stones" in any field. The system may take a number of results and calculate a playability score using Fred's playlist as a base playlist. A user may define, for example, an acceptable score of a playlist or a percentage of songs in a playlist that are playable by the user and have this information used to determine if the playlist should be returned by the search. The user may also download the playable songs in the returned playlist and purchase or mark for later purchasing songs in the playlist that are not playable by the user.

Some embodiments of the present invention include methods and systems for searching to find similarities between the content of a plurality of users by looking at their playlists. This search might return some number of users that are most similar to a specified user. For example, having many of the same songs in the libraries of two users would be an indication that these users may be compatible. However, the frequency of access to the content may also be considered. For example, if two users have many of the same songs, but almost never play the songs that they have in common, the system and methods of the present invention may not considered them compatible. Conversely, users having only a small amount of content in common may be considered compatible if they access that common content with high frequency.

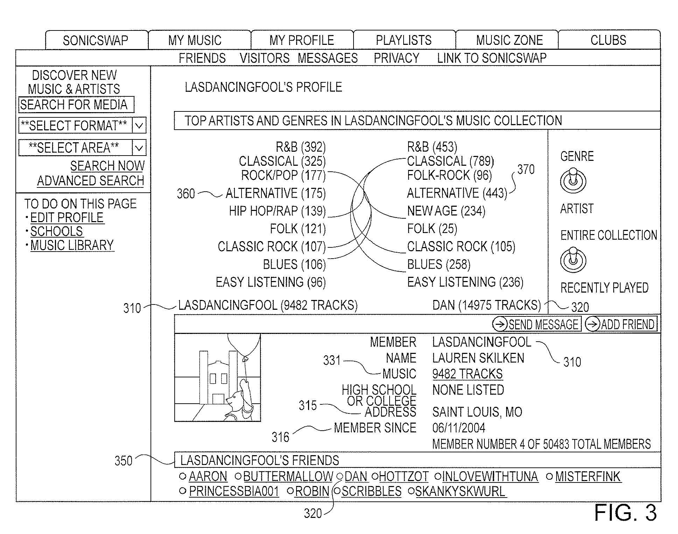

FIG. 3 illustrates a representative screen shot that includes a profile of a user that shows some of the information that may be associated with a user. For example, the profile for user 310, here identified by the UserName lasdancingfool, includes, for example, addresses information 315, membership date information 316, and indicates her content collection includes 9,482 music tracks 331. User 310 also maintains a list of other users 350, identified in Fig. 3 as friends. User 310 may, for example, compare her music collection and exchange playlists with those friends 350. FIG. 3 also shows example results of a comparison of the overlap between user 310 and user 320 (i.e., dan), which considers genre for their entire collections. The comparison shows, for example, that both users have music from the genre "Alternative" 360 and 370. A comparison similar to that shown in FIG. 3 may be created by considering, for example, specific artists, what has been played and with what frequency, or any combination thereof. A si milar type of search may be performed to compare a plurality of playlists to each other.

In some embodiments of the present invention, systems and methods are provided to transport playlists from one system to another. Playlists may be stored in a playlist database repository in a standard format with related meta tag data defined for each playlist and the included content references. Users may e-mail, download, or otherwise electronically transfer playlists from one system to another. This transfer may be accomplished, for example, by users downloading playlists to their desktop or wireless device such as a cellular phone or PDA. Users may also access playlists remotely from a system. A remotely accessed or transmitted playlist may include any or all of the meta tags and other information discussed previously. When playlists are transported they may be converted, depending on the formats required by the various devices, to and from various device independent and dependent formats to make them usable.

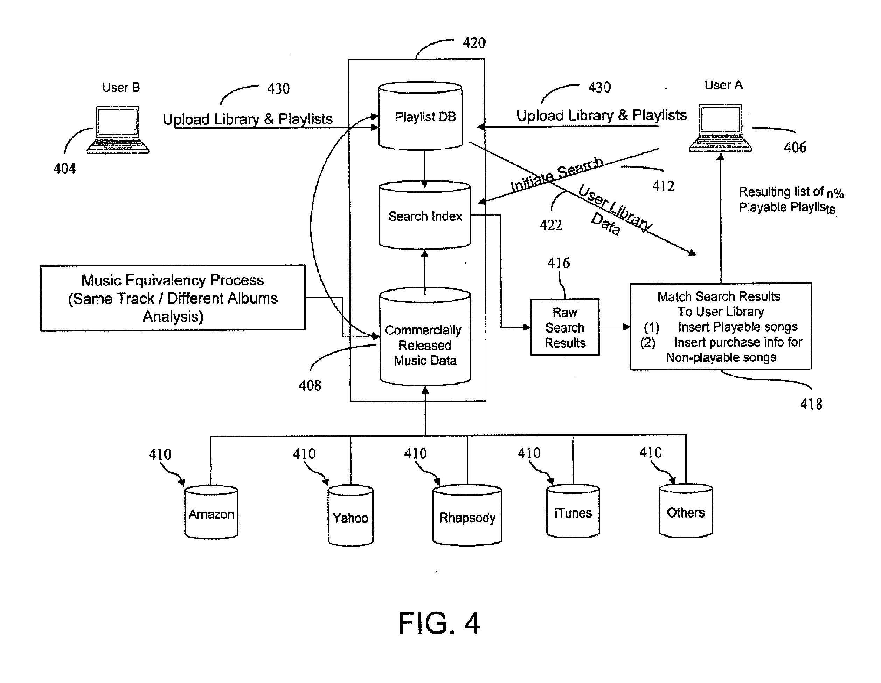

FIG. **4** depicts an illustrative system suitable for implementation of systems and methods used in accordance with some embodiments of the present invention. User B **404** and User A 406 are users of the system. It should be understood by those skilled in the art that the present invention is not limited to two users. The number was chosen more for ease of explanation. The users **404** and **406** may upload 430 their respective playlists to a system of a server and related components **420.** The systems and methods may convert between device dependent and device independent formats as required and as discussed above. The system **420** contains a database **408** of commercially released music data. This database **408** may be accumulated from many sources; some examples of possible sources **410** are shown feeding into the database **408**.

In some embodiments, if User A **406** sends a search request **412** (e.g., return playlists that include Metallica songs) to the system **420,** the system **420** may return search results **416.** The search results may be further filtered or sorted **418** based on criteria such as, for example, playability. The filtering and sorting may be done, for example, by the system **420** or the by the user **406** and be based at least in part on information from the user's library data **422.** Playability filtering may use the search results and compare each playlist with the content references in a user's library to identify what percentage of content referenced in the playlist are playable by that user. Results may be displayed by playability percentage. Content references and playlists that are playable may be returned to the User A **406.** Information on content or playlists that are not playable may also be returned to User A **406** with information enabling the user to purchase or license content that the user may desire from the returned results. This information may be in the form of link to a service or store that sells music or other content to the user. Additionally, the purchasing of music may be carried out using embodiments of the systems and methods of the present invention. The systems and methods for purchasing music may depend, for example, at least in part on what type of digital content player the user is using and what digital content the user already owns.

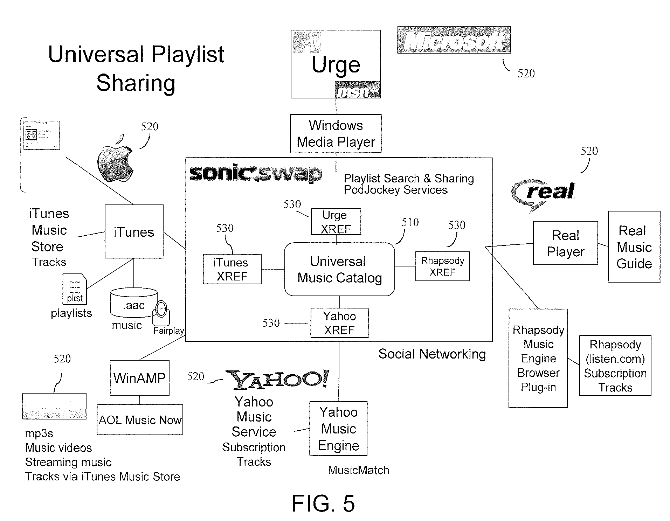

FIG. 5 illustrates example implementations of systems and methods of the present invention. In this example, the commercially released music data **408** of FIG. 4 is implemented as Universal Music Catalog **510** and contains content from a variety of commercial sources **520.** As shown in FIG. 5, a list of cross-references **530** may be created and maintained for each of the commercial sources **520.** Cross-references **530** may be used to translate between various device dependent formats, as discussed above.

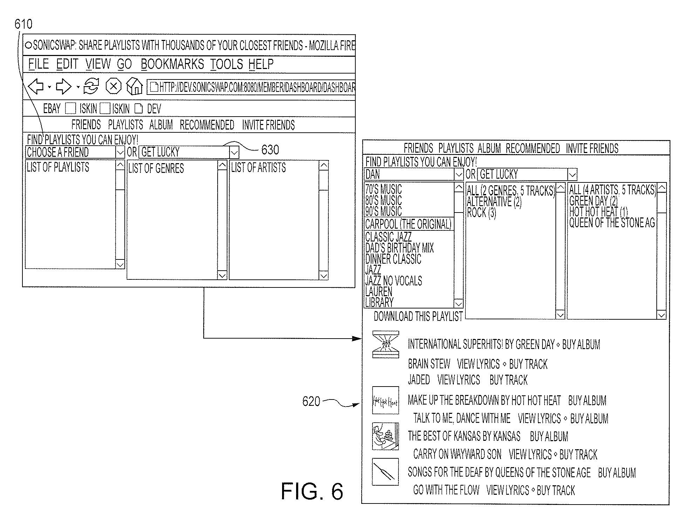

FIG. 6 illustrates parts of an example interface for viewing and searching for playlists by a user. Pull down menu **610,** which may be displayed on a user's monitor, allows a user to select among users that are considered friends. When a friend is selected, the friend's uploaded playlists are displayed in window **620.** The user may, for example, select and use a friend's playlist and may be prompted, based at least in part on playability, to purchase content referenced in a selected playlist. Also, instead of directly selecting a friend, a user can use pull down menu **630** to view playlists using other options such as, for example, displaying playlists of users with similar interest.

Although the methods and systems of the present invention are described herein as being implemented on a client or server, this is only illustrative. The application may be implemented on any suitable platform (e.g., a personal computer (PC), a mainframe computer, a dumb terminal, a data display, a two-way pager, a wireless terminal, a portable telephone, a portable computer, a palmtop computer, a H/PC, an automobile PC, a laptop computer, a personal digital assistant (PDA), a combined cellular phone and PDA, a digital music player, a digital video player, etc.) to provide such features.

Although the invention has been described and illustrated in the foregoing illustrative embodiments, it is understood that the present disclosure has been made only by way of example, and that numerous changes in the details of implementation of the invention can be made without departing from the spirit and scope of the invention. For example, although songs and video files were used as examples, the invention is not limited in this manner. Rather, according to various embodiments of the present invention, any media format might be used.

Therefore, other embodiments, extensions, and modifications of the ideas presented above are comprehended and should be within the reach of one versed in the art upon reviewing the present disclosure. Accordingly, the scope of the present invention in its various aspects should not be limited by the examples presented above. The individual aspects of the present invention, and the entirety of the invention should be regarded so as to allow for such design modifications and future developments within the scope of the present disclosure.

## Claims

1. A method for accessing digital content, comprising:
receiving a request to search (412) a database (408) comprising digital content lists based at least in part on parameters received from a user (102, 310, 404, 406);
returning a digital content list (416) including at least one reference to digital content in response to the request; and
determining if any of the digital content referred to by the at least one reference to digital content is playable by the user (102, 310, 404, 406).

2. The method of claim 1, wherein determining if any of the digital content referred to by the at least one reference to digital content is playable by the user (102, 310, 404, 406) is based at least in part on whether the user (102, 310, 404, 406) owns any of the digital content referred to by at least one reference to digital content in the returned digital content list (416).

3. The method of claim 1, wherein determining if any of the digital content referred to by the at least one reference to digital content is playable by the user (102, 310, 404, 406) is based at least in part on whether any of the digital content referred to by at least one reference to digital content in the returned digital content list is copyrighted.

4. The method of claim 1, wherein the parameters received from the user (102, 310, 404, 406) include a user digital content list including at least one reference to digital content.

5. The method of any preceding claim further comprising:
comparing the user list to at least one other digital content list in the database (408) comprising digital content lists; and
calculating a score based on the similarity of the digital content referenced in the user list and the at least one other list, wherein the digital content referenced in the returned digital content list is based at least in part on the score.

6. The method of any preceding claim wherein the user list is in a first format and the at least one other list is in a second format and further comprising translating the user list into the second format wherein comparing the user list is performed on the translated user list and the at least one other list in the second format.

7. The method of any of claims 1 to 5 wherein the user list is in a first format and the at least one other list is in a second format and further comprising translating the user list and the at least one other list into a third format wherein comparing the user list is performed on the translated user list and the translated at least one other list.

8. The method of any of claims I to 5 wherein the user list is in a first format and the at least one other list is in a second format and further comprising providing a cross-reference between the first format and the second format.

9. The method of any preceding claim wherein the digital content is music.

10. The method of any of claims 1 to 8, wherein the digital content is video.

11. The method of any preceding claim wherein at least one list of digital content in the database comprising digital content lists includes a privacy setting.

12. The method of any preceding claim wherein the database comprising digital content lists includes the digital content referred to by the digital content lists.

13. The method of any preceding claim further comprising sending the returned digital content list to the user.

14. The method of any preceding claim further comprising enabling purchase of any of the digital content referred to by the at least one reference to digital content if the digital content is not playable by the user.

15. A method for finding users (404, 406) with similar digital content comprising:
receiving a request for identification of users having similar digital content from a first user (404, 406);
comparing a library (422) comprising digital content of the first user to libraries comprising digital content of a plurality of other users (404, 406) based at least in part upon similarity between the library of digital content of the first user and the libraries of digital content of the plurality of other users; and
returning a reference to at least one user of the plurality of users to the first user based upon the similarity between the digital content included in the library of the first user and the digital content included in the library of the at least one user of the plurality of users.

16. The method of claim 15, wherein the similarity is based at least in part on at least one of artist, composer, and genre.

17. The method of claim 15, wherein the digital content is music and wherein the similarity is based on a number of songs included in the library comprising digital content of the first user (404, 400) also included in at least one of the libraries (422) comprising digital content of a plurality of other users.

18. The method of claim 15, wherein the similarity is based at least in part on frequency of access to similar digital content.

19. The method of any of claims 15 to 18, wherein the digital content is music.

20. The method of any of claims 15 to 18, wherein the digital content is video.

21. A system (100) for accessing digital content, comprising:
an interface means in communication with a network (106);
a memory (208), and
a processing means (202) in communication with the interface and the memory; wherein the processing means (202) further comprises;
a receiving means for receiving a request to search a database comprising digital content lists based at least in part on parameters received from a user (102, 310, 404, 406);
a returning means for returning a digital content list including at least one reference to digital content in response to the request; and
a determining means for determining if any of the digital content referred to by the at least one reference to digital content is playable by the user (102, 310, 404, 406).

22. The system of claim 21, wherein the parameters received from the user (102, 310, 404, 406) include a user digital content list including at least one reference to digital content.

23. The system of claim 22, wherein the processor further comprises
a comparing means for comparing the user list to at least one other digital content list in the database (408) comprising digital content lists; and
a calculating means for calculating a score based on the similarity of the digital content referenced in the user list and the at least one other list, wherein the digital content referenced in the returned digital content list is based at least in part on the score.

24. The system of claim 23, wherein the user list is in a first format and the at least one other list is in a second format and wherein the processing means (202) further comprises a translating means for translating the user list into the second format wherein the comparing means is for comparing the translated user list and the at least one other list in the second format.

25. The system of claim 23, wherein the user list is in a first format and the at least one other list is in a second format and wherein the processing means (202) further comprises a translating means for translating the user list and the at least one other list into a third format wherein the comparing means is for comparing translated user list and the translated at least one other list.

26. The system of claim 23, wherein the user list is in a first format and the at least one other list is in a second format and wherein the processing means (110) further comprises a providing means for providing a cross-reference (530) between the first format and the second format.

27. The system of claim 21, wherein the processing means (202) further comprises a purchasing means to allow purchasing of any of the digital content referred to by the at least one reference to digital content if the digital content is not playable by the user.

28. A system (100) for accessing digital content, comprising:
an interface means in communication with a network;
a memory; and
a processing means (202) in communication with the interface and the memory; wherein the processing means further comprises:
a receiving means for receiving a request for identification of users having similar digital content from a first user;
a comparing means for comparing a library comprising digital content of the first user to libraries comprising digital content of a plurality of other users based at least in part upon similarity between the library of digital content of the first user and the libraries of digital content of the plurality of other users; and
an output means for outputting a reference to at least one user of the plurality of users to the first user based upon the similarity between the digital content included in the library of the first user and the digital content included in the library of the at least one user of the plurality of users.

29. The system of claim 28, wherein the similarity is based at least in part on at least one of artist, composer, and genre.

30. The system of claim 28, wherein the similarity is based at least in part on frequency of access to similar digital content.
